(19) Europäisches Patentamt
European Patent Office
Office européen des brevets

(11) **EP 1 320 199 B1**

(12) **FASCICULE DE BREVET EUROPEEN**

(45) Date de publication et mention
de la délivrance du brevet:
**13.09.2006 Bulletin 2006/37**

(51) Int Cl.:
*H04B 5/00* (2006.01)     *G07C 9/00* (2006.01)

(21) Numéro de dépôt: **01204915.1**

(22) Date de dépôt: **17.12.2001**

(54) **Récepteur portable à faible dispersion**

Tragbarer Empfänger mit niedriger Streuung

Portable receiver with low dispersion

(84) Etats contractants désignés:
**CH DE FR GB LI**

(43) Date de publication de la demande:
**18.06.2003 Bulletin 2003/25**

(73) Titulaire: **EM Microelectronic-Marin SA**
**2074 Marin (CH)**

(72) Inventeur: **Lamothe, Christian**
**2000 Neuchâtel (CH)**

(74) Mandataire: **Ravenel, Thierry Gérard Louis et al**
**I C B,**
**Ingénieurs Conseils en Brevets SA,**
**7, rue des Sors**
**2074 Marin (CH)**

(56) Documents cités:
**EP-A- 1 043 843**      **FR-A- 2 763 186**
**GB-A- 1 485 827**

**Description**

La présente invention concerne un récepteur portable destiné notamment à des applications dans l'industrie automobile, en particulier pour des systèmes d'ouverture avec clé sans contact, et plus généralement à des applications pour système de détection sans contact, en particulier pour des systèmes d'accès contrôlé avec badge sans contact.

Le récepteur portable comprend un étage de réception dans lequel au moins deux antennes sont orientées suivant deux axes de réception différents formant un repère, les antennes étant susceptibles de recevoir chacune une composante, suivant leur axe de réception, d'un signal externe dans une plage de fréquences donnée, un étage de traitement desdites au moins deux composantes délivrées par l'étage de réception, et un étage de recombinaison d'au moins deux signaux délivrés en sortie de l'étage de traitement.

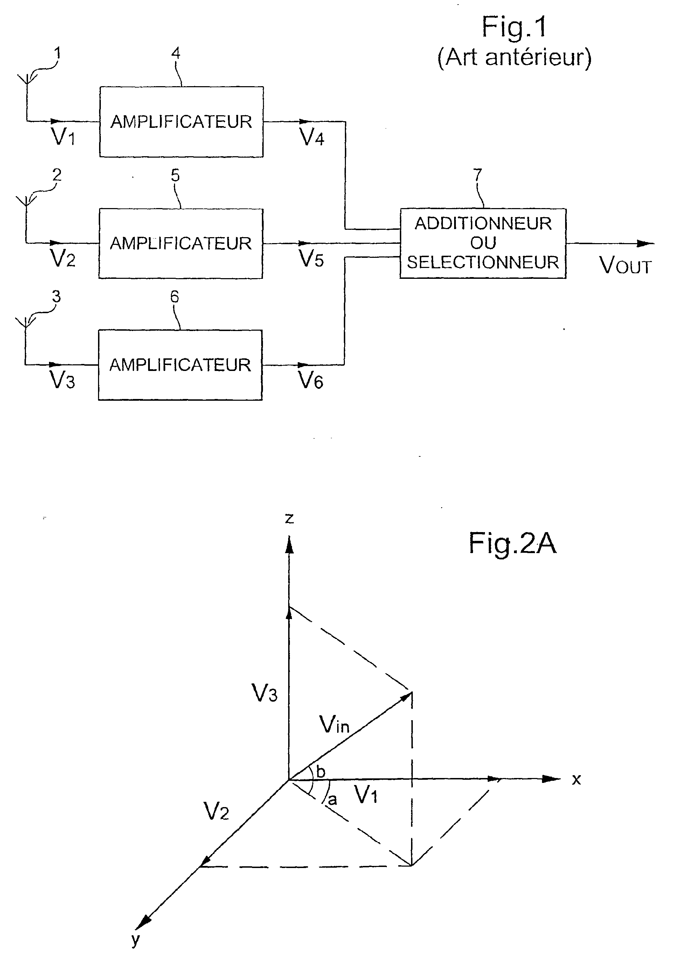

Il est connu dans l'art antérieur, notamment du document FR 2 763 186, un récepteur portable à trois antennes disposées dans une clé de véhicule automobile. Un tel récepteur est représenté à la figure 1, il comprend trois antennes 1, 2 et 3 orientées perpendiculairement deux à deux, permettant ainsi à chacune de recevoir une des trois composantes V1, V2 et V3 dans le repère orthogonal formé par les antennes, d'un signal externe Vin émis par un émetteur non représenté, disposé dans le véhicule automobile.

Des amplificateurs 4, 5 et 6 sont connectés en sortie de chaque antenne. Les signaux amplifiés V4, V5 et V6 sont ensuite fournis selon un premier mode, en entrée d'un additionneur 7 fournissant en sortie la somme des trois signaux.

Selon un deuxième mode de réalisation, les signaux amplifiés V4, V5 et V6 sont fournis en entrée de moyens de sélection 7 permettant de sélectionner un signal parmi ces trois signaux V4, V5 ou V6. Le signal sélectionné est celui dont l'amplitude est la plus importante.

Ces deux modes présentent néanmoins quelques inconvénients. L'un des soucis de l'homme du métier est d'obtenir un récepteur susceptible de recevoir quelle que soit son orientation par rapport à l'émetteur, s'il se trouve dans le champ d'émission de ce dernier. En effet, pour des raisons de sécurité et de commodité d'usage, il est très important que la zone de dispersion soit minimale. On entend par zone de dispersion, la zone spatiale dans laquelle la réception ou non par le récepteur d'un signal externe émis, dépend de l'orientation du récepteur par rapport à l'émetteur. L'étendue de cette zone de dispersion est définie par le facteur de dispersion du récepteur. Ce facteur de dispersion correspond aux variations possibles de l'amplitude du signal reçu par le récepteur selon son orientation, il est exprimé par un nombre compris dans une fourchette variant entre 0 et 1, la dispersion correspondante étant exprimée en pourcentage.

Etudions les facteurs de dispersion obtenus avec les solutions du document FR 2 763 186 selon les deux modes présentés à la figure 1. Comme cela est représenté à la figure 2A, le signal externe reçu est décomposé en trois signaux V1, V2 et V3, suivant les axes de réception "x", "y" et "z" des trois antennes. On prendra comme signal externe reçu, par exemple Vin = VO.coswt, où V0 est l'amplitude et coswt la phase du signal émis.

Selon les deux modes, les signaux reçus V1, V2 et V3 par les antennes sont donnés par les formules suivantes :

V1 = Vin.cosa.cosb
V2 = Vin.sina.cosb
V3 = Vin.sinb

où "a" et "b" représentant les deux angles utilisés pour définir le signal reçu suivant les axes "x", "y" et "z" des trois antennes.

Le facteur de dispersion est défini par les extremums de l'amplitude du signal délivré en sortie de l'additionneur ou des moyens de sélection du récepteur.

Selon le premier mode comprenant l'additionneur, si l'on considère que le gain G de chaque amplificateur est identique, l'amplitude du signal de sortie Vout est donnée par la formule suivante :

$$Vout = G.Vin.(cosb.(cosa + sina) + sinb) ;$$

L'amplitude du signal de sortie est maximale lorsque l'axe de réception d'une des antennes est orienté en direction de l'émetteur. Par exemple, lorsque a = 0 et b = 0, dans ce cas, on obtient en sortie le signal Vout suivant :

$$Vout = G.Vin$$

L'amplitude du signal est minimale dans les exemples suivants :

a = -pi/4 et b=0;
a = 3pi/4 et b=0;
a = 0 et b = -pi/4 ;
a = 0 et b = 3pi/4;

Dans ces quatre exemples, l'amplitude du signal Vout est nulle. Cette situation est appelée "trou de réception", c'est-à-dire, que le récepteur orienté de cette manière ne reçoit aucun signal quelle que soit la distance qu'il le sépare de l'émetteur.

Le facteur de dispersion selon ce premier mode varie donc entre 0 et 1, la dispersion est donc de 100%. La zone de dispersion est donc maximale puisqu'elle comprend tout l'espace. En effet, quelle que soit la position du récepteur dans l'espace, il existe au moins quatre orientations pour lesquelles il ne reçoit aucun signal de l'émetteur.

Il est important de noter que de tels trous de réception se retrouvent également lors de l'utilisation d'un soustracteur à la place de l'additionneur.

Une telle solution n'est pas envisageable pour des raisons évidentes de sécurité et de commodité d'usage.

Selon le deuxième mode comprenant des moyens de sélection à !a place de l'additionneur, le signal de sortie Vout correspond, à un facteur de gain G près, au signal V1, V2 ou V3, ayant la plus grande amplitude, reçu par l'une des antennes.

L'amplitude du signal de sortie Vout sélectionné est maximale lorsque l'axe de réception de l'une des antennes du récepteur est orientée en direction de l'émetteur, les deux autres antennes ne reçoivent alors aucun signal, par exemple a = 0 et b = 0. Dans ce cas, le signal de sortie Vout sélectionné est donné par la formule suivante :

$$Vout = G.Vin$$

L'amplitude du signal de sortie Vout sélectionné est minimale lorsque les trois antennes sont orientées de manière à recevoir le signal externe de l'émetteur avec une même amplitude. Ce qui revient à avoir des signaux égaux délivrés par chacune des antennes :

$$V1 = V2 = V3$$

Ce qui implique :

$$cosa = sina$$

$$cos^2b = 2.sin^2b$$

On obtient donc le signal de sortie Vout sélectionné ayant une amplitude minimale :

$$Vout = 1/\sqrt{3}.G.Vin \; ;$$

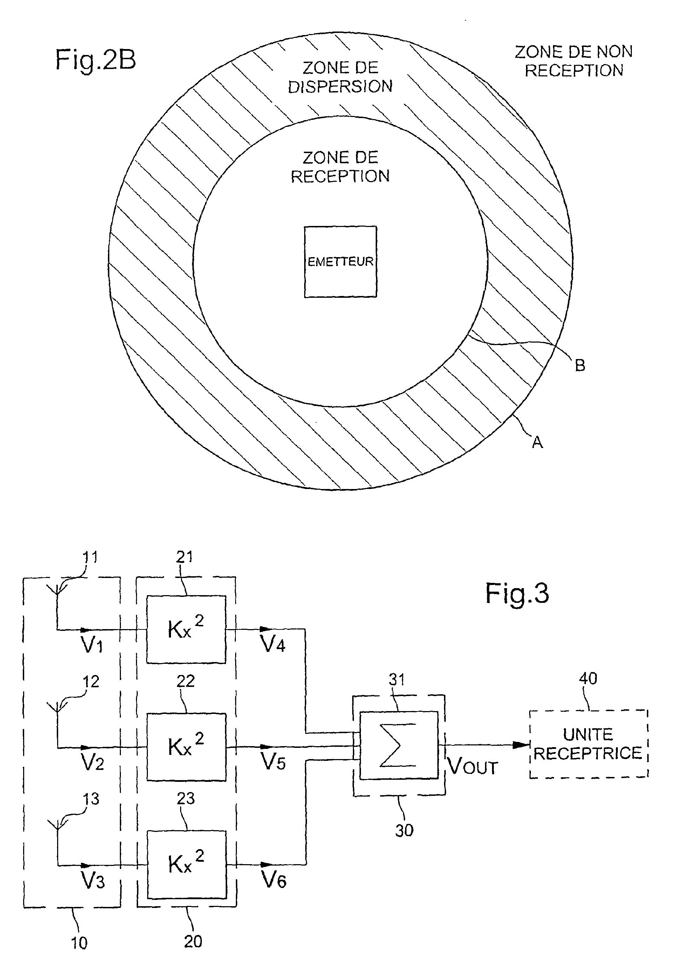

Le facteur de dispersion selon ce deuxième mode varie donc entre $1/\sqrt{3}$ et 1, la dispersion est donc de l'ordre de 42%. La zone de dispersion s'étale, comme représenté à la figure 2 B, depuis la limite de réception A définie notamment en fonction de la distance entre émetteur et récepteur et de la sensibilité de ce dernier, jusqu'à une limite B se situant environ 42% plus près par rapport à l'émetteur. Dans toute cette zone de dispersion, la réception ou non des signaux externe émis dépend de l'orientation du récepteur par rapport à l'émetteur. En effet, le récepteur étant placé à la limite de sa sensibilité de réception, toute baisse d'amplitude du signal reçu sur les antennes, peut se traduire par la non réception dudit signal.

Cette solution, présentant une zone de dispersion de l'ordre 42% de la zone totale de réception, n'est évidemment pas satisfaisante pour les mêmes raisons de sécurité et de commodité d'usage.

La présente invention permet de pallier les inconvénients de l'art antérieur, notamment en proposant un récepteur à faible dispersion, permettant d'assurer d'une bonne réception des signaux émis, lorsque le récepteur est situé dans le champ d'émission de l'émetteur, c'est-à-dire dans la zone de réception totale définie notamment par la distance entre l'émetteur et le récepteur, la sensibilité du récepteur et la puissance du signal émis. Le récepteur selon l'invention reçoit correctement tous les signaux émis quelle que soit son orientation tant que sa limite de sensibilité n'est pas atteinte et ne reçoit plus aucun signal quand cette limite est dépassée.

Le récepteur portable selon l'invention, en plus de ce qu'il correspond au récepteur défini en préambule, est caractérisé en ce que l'étage de traitement comprend des élévateurs au carré connectés chacun entre une antenne et une entrée de l'étage de recombinaison.

Dans un mode de réalisation particulier de l'invention, le récepteur portable effectue de la modulation d'amplitude pour recouvrir les signaux émis, et dans ce cas, il est prévu d'ajouter des moyens d'atténuation à coefficient d'atténuation variable commandés par des moyens de commande automatique du gain.

La figure 1, déjà décrite, représente un récepteur portable selon l'art antérieur utilisant soit un additionneur, soit des moyens de sélection ;

La figure 2A, déjà décrite, représente la décomposition du signal émis en trois signaux dans le repère orthogonal formé par les trois antennes ;

La figure 2B, déjà décrite, représente la zone de dispersion selon le deuxième mode de réalisation de l'art antérieur ;

La figure 3 représente un récepteur portable selon l'invention, quel que soit le type de modulation réalisé par la suite ;

La figure 4 représente un récepteur portable effectuant de la modulation d'amplitude selon un premier mode de réalisation ;

La figure 5 représente un récepteur portable effectuant de la modulation d'amplitude selon un deuxième mode de réalisation ;

La figure 6 représente un récepteur portable comprenant des éléments différentiels selon un troisième mode de réalisation ;

La figure 7 est un exemple d'élévateur au carré différentiel selon l'invention ;

La figure 8 présente une solution de récepteur portable ne comprenant que deux antennes.

La figure 3 représente le principe général de fonctionnement d'un récepteur portable selon l'invention. L'invention concerne en particulier la partie réception du récepteur portable. Il est à noter qu'un tel récepteur portable comprend en outre une partie démodulation permettant de démoduler les signaux délivrés en sortie de la partie réception. Le dispositif comprenant le récepteur portable, c'est-à-dire la clé ou la carte, est susceptible de comprendre également un émetteur, non représenté.

Le récepteur portable, dans sa partie réception, est composé de trois étages fonctionnels. Un premier étage 10 dit de réception proprement dite, comprend trois antennes 11, 12 et 13 destinées à recevoir des signaux externes dans une plage de fréquences donnée, centrée autour de la fréquence des signaux émis par l'émetteur, par exemple du véhicule automobile, non représenté. Dans l'exemple d'une clé comprenant le récepteur portable, si la clé comprend également un émetteur, les mêmes antennes sont utilisées de préférence pour émettre des signaux.

Ces trois antennes 11, 12 et 13 sont préférentiellement orientées de manière à former un repère sensiblement orthogonal, comme représenté à la figure 2A. Les antennes peuvent être choisies avec des caractéristiques propres différentes, des moyens de correction, non représentés, sont alors prévus en entrée de l'étage de traitement, pour obtenir un gain uniforme à la sortie de chacune des trois antennes. Les moyens de correction sont typiquement constitués par un circuit RC parallèle dont la valeur des composants est choisie de manière à uniformiser le gain de chaque antenne.

Pour des raisons de simplification, les antennes sont considérées comme ayant des caractéristiques similaires par la suite. Ainsi le repère formé par les trois antennes est un repère orthonormé.

Le signal externe reçu est de la forme suivante : $Vin = V0.coswt$, où $V0$ est l'amplitude et $coswt$ la phase du signal émis. Ce signal $Vin$ est décomposé en trois composantes suivant l'axe de réception de chaque antenne, comme il a été vu dans le cadre de la présentation de l'art antérieur.

Le récepteur comprend un deuxième étage 20 dit de traitement comprenant notamment trois élévateurs au carré 21, 22 et 23. Ces élévateurs au carré sont réalisés, selon un exemple très simple, au moyen de mélangeurs à deux entrées reliées entre elles.

Il est à noter que l'utilisation d'un élévateur au carré introduit un coefficient de normalisation K, constant dans une certaine plage de fonctionnement en fonction de l'amplitude du signal que l'élévateur reçoit. En effet, le signal récupéré en sortie d'un élévateur est de même nature que le signal fourni en entrée de l'élévateur, comme par exemple une tension. Ce coefficient est sensiblement le même si l'on utilise des élévateurs sensiblement identiques. Il est néanmoins possible de prévoir des moyens d'uniformisation du gain, non représentés, si on utilise des élévateurs au carré ayant des coefficients de normalisation différents. Ces moyens d'uniformisation du gain pourront avantageusement être inclus dans les moyens de correction des antennes s'ils en existent. On considèrera pour la suite, que les élévateurs au carré 21, 22 et 23 ont été choisis avec des coefficients de normalisation K sensiblement égaux.

Les signaux V1, V2 et V3 délivrés en sortie des trois antennes 11, 12 et 13 sont donc fournis en entrée des trois élévateurs 21, 22 et 23 de l'étage 20 de traitement. Les signaux V4, V5 et V6 délivrés en sortie de ces élévateurs sont donnés par les formules suivantes :

$$V4 = K.Vin^2.cos^2a.cos^2b$$
$$V5 = K.Vin^2.sin^2a.cos^2b$$
$$V6 = K.Vin^2.sin^2b$$

Le récepteur comprend un troisième étage 30 dit de recombinaison du signal reçu en entrée. Cet étage de recombinaison 30 est composé par exemple d'un additionneur 31 recevant sur trois entrées, chacun des signaux V4, V5 et V6 délivrés en sortie des trois élévateurs 21, 22 et 23. Il est également possible d'utiliser un soustracteur, si les signaux en sortie des élévateurs au carré ont des polarités différentes.

Dans le cas de l'utilisation d'un additionneur comme moyen de recombinaison, le signal délivré en sortie de l'additionneur est de la forme suivante.

$$Vout = K.Vin^2 = \tfrac{1}{2}.K.V0^2.(1+cos2wt)$$

On notera qu'il ressort trois caractéristiques principales du signal de sortie Vout. Premièrement, ce qui est le but recherché, Vout est totalement indépendant de l'orientation du récepteur portable par rapport à l'émetteur externe, les dépendances par rapport à "a" et "b" liées au repère ayant disparues. La dispersion est donc théoriquement nulle.

Deuxièmement, la fréquence de ce signal est double par rapport au signal émis, ce qui n'est pas préjudiciable, des moyens diviseurs de fréquence, non représentés, pouvant être ajoutés si nécessaire.

Troisièmement, une composante continue ($\tfrac{1}{2}.K.V0^2$) est introduite, le facteur $\tfrac{1}{2}$ étant dû au redressement de l'alternance négative. Cette tension d'« offset » introduite n'est pas préjudiciable dans la mesure où K reste dans une plage de fonctionnement définie suivant le type d'élévateur au carré utilisé.

Le signal de sortie Vout est ensuite fourni en entrée de la partie modulation, représentée ici sous la forme d'une unité réceptrice 40, permettant de récupérer le signal utile à l'intérieur de la porteuse. La modulation effectuée peut être typiquement soit une modulation d'amplitude, ce qui est courant, soit une modulation d'amplitude par tout ou rien (ON-OFF), soit encore une modulation de fréquence ou de phase, ou encore tout autre modulation utilisable dans un tel récepteur.

Lors de la mise en oeuvre de l'invention, il a été mis en évidence le besoin d'obtenir un signal de sortie dont l'amplitude moyenne est importante. C'est pourquoi, il est prévu d'ajouter des moyens amplificateurs, non représentés, pour augmenter l'amplitude du signal externe reçu. Suivant les besoins, les moyens amplificateurs peuvent être connectés à différents endroits dans le circuit.

Par exemple, s'il on a besoin d'une amplitude très importante en sortie, trois amplificateurs à facteur de gain élevé sont respectivement connectés entre une des trois antennes 11, 12 et 13 de l'étage de réception et l'élévateur au carré 21, 22 et 23 correspondant de l'étage de traitement. En revanche, s'il on a besoin d'une amplitude importante tout en réduisant au maximum la consommation, un seul amplificateur est utilisé, cet amplificateur étant connecté en sortie de l'étage 30 de recombinaison. D'autres solutions, pour la disposition des amplificateurs sont également possibles. Notamment s'il on a besoin d'obtenir un gain plus précis, il est possible de combiner les deux solutions susmentionnées.

Il est également important d'obtenir un signal de sortie, si l'on ne considère pas un éventuel signal d'offset, proportionnel au signal externe reçu. Pour cela, les antennes sont choisies de préférence sensiblement identiques, ainsi que les élévateurs au carré. De plus, pour le cas où plusieurs amplificateurs sont utilisés entre les antennes et les élévateurs, les amplificateurs sont également choisis de manière à présenter un facteur de gain sensiblement identique.

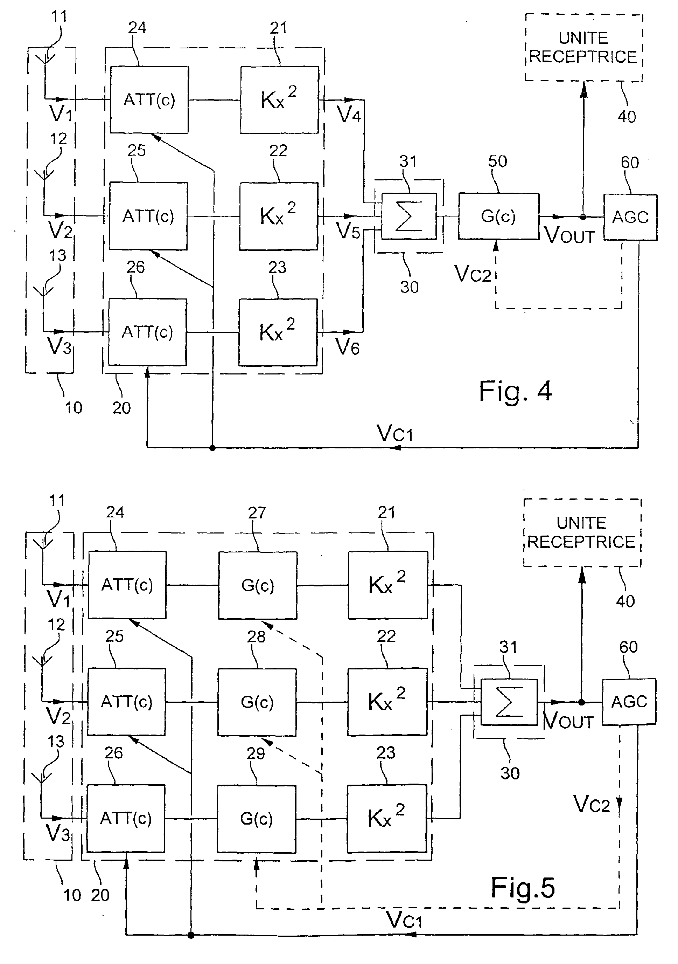

La figure 4 est un récepteur portable effectuant de la modulation d'amplitude selon un premier mode de réalisation. Le récepteur est également décomposé en trois étages, un premier étage 10 de réception, un deuxième étage 20 de traitement et un troisième étage 30 de recombinaison.

Comme à la figure 3, l'étage 10 de réception comprend trois antennes 11, 12 et 13 orientées de manière à ce que leurs axes de réception forment un repère sensiblement orthogonal. L'étage 20 de traitement comprend notamment trois élévateurs au carré 21, 22 et 23. Et l'étage 30 de recombinaison comprend un additionneur 31.

Selon ce premier mode particulier, un seul amplificateur 50 est utilisé en sortie de l'étage 30 de recombinaison, dans un souci de réduction de la consommation.

Lors de la modulation d'amplitude, le signal de sortie Vout ne doit pas être saturé. Il a été mentionné précédemment que les élévateurs au carré introduisent un coefficient de normalisation K, constant dans une plage de fonctionnement définie fonction de l'amplitude du signal reçu par l'élévateur. Pour éviter la saturation de la sortie de ces élévateurs, il est donc important qu'ils soient utilisés dans leur plage de fonctionnement dans laquelle le signal reçu en entrée n'est ni amplifié, ni saturé de manière prohibitive.

Dans cet objectif, des moyens d'atténuation sont prévus en entrée de l'étage 20 de traitement. Ces moyens d'atténuation comprennent trois atténuateurs 24, 25 et 26 respectivement connectés entre une antenne 11, 12 et 13 et un élévateur 21, 22 et 23.

Selon une première variante de ce premier mode, ces atténuateurs 24, 25 et 26 sont à coefficient d'atténuation (Att) fixe. Dans ce cas, le coefficient (Att) est choisi de manière à ce que si une antenne reçoit l'intégralité du signal externe Vin, le signal atténué délivré en sortie de l'atténuateur ait une amplitude dans la plage de fonctionnement de l'élévateur connecté en sortie de l'atténuateur. Si les antennes et les élévateurs sont sensiblement identiques, les coefficients d'atténuation sont alors choisis sensiblement égaux. Cette première variante présente toutefois l'inconvénient de réduire la zone totale de réception. En effet, cette solution présente le risque d'effectuer une atténuation trop importante des signaux externes reçus, ce qui pourrait nuire à la portée de fonctionnement du récepteur.

C'est pourquoi, selon une deuxième variante préférée de ce premier mode, les atténuateurs 24, 25 et 26 sont à coefficient variable Att(c). En sortie de l'amplificateur 50, une unité de commande automatique du gain 60 est prévue. Cette unité de commande est connectée de manière à boucler la sortie de la partie réception sur les atténuateurs 24, 25 et 26. L'utilisation d'atténuateurs à coefficient d'atténuation variable Att(c) est avantageuse en ce qu'ils permettent de fournir à l'entrée de chaque élévateur 21, 22 et 23, des signaux dont l'amplitude est fonction du signal de commande reçu. Pour cela, l'unité de commande automatique du gain 60 envoie un signal de commande Vc1 du coefficient d'atténuation à chaque atténuateur de manière à ce que l'amplitude des signaux délivrés en entrée des élévateurs soit comprise dans la plage de fonctionnement de l'élévateur.

Il peut être prévu que l'unité de commande automatique du gain 60 envoie des signaux de commande, dont les valeurs sont appropriées à chacun des atténuateurs 24, 25 et 26 par l'intermédiaire d'un bus de signaux. Ce bus de signaux est préférentiellement utilisé dans les cas où les caractéristiques des différents éléments, comme les antennes et les élévateurs, sont différents.

De plus, dans le cadre de l'invention, il a été mis en évidence, le besoin d'obtenir un signal de sortie Vout dont l'amplitude est la plus constante possible. L'amplificateur 50 placé en sortie de l'étage de recombinaison 30 pouvant avoir un facteur de gain fixe ou variable, on choisira de préférence un facteur de gain variable G(c) pour bénéficier d'un paramètre supplémentaire de contrôle du gain total obtenu en sortie. Pour cela l'unité de commande automatique du gain envoie un autre signal de commande Vc2 du facteur de gain des amplificateurs.

Ainsi, les signaux de commande Vc1 et Vc2 permettent notamment en fonction des signaux externes V1, V2 et V3 reçus, de stabiliser l'amplitude du signal de sortie Vout, ce qui est indispensable lors d'une modulation d'amplitude par l'unité réceptrice 40.

L'introduction des atténuateurs à coefficient d'atténuation variable Att(c) et de l'amplificateur à facteur de gain variable G(c), ne fait que modifier le gain du signal. Le signal de sortie est donc toujours indépendant de l'orientation du récepteur par rapport à l'émetteur. Lorsque les différents éléments possèdent des caractéristiques propres identiques (antennes, élévateurs, atténuateurs), le signal de sortie est donné par la formule suivante :

$$Vout = K.Att^2.G.(V1^2 + V2^2 + V3^2) = K.Att^2.G.Vin^2 ;$$

soit :

$$Vout = \tfrac{1}{2}.K.Att^2.G.V0^2.(1+\cos 2wt) ;$$

La figure 5 représente un récepteur portable selon un deuxième mode de réalisation de l'invention.

Les éléments constitutifs de ce récepteur sont les mêmes que celui de la figure 4 à la différence des moyens d'amplification. Selon ce deuxième mode, l'amplificateur placé en sortie de l'étage de recombinaison 30 est remplacé par trois amplificateurs 27, 28 et 29 placés soit entre les trois atténuateurs 24, 25 et 26 et les trois élévateurs au carré 21, 22 et 23 correspondants comme représenté, soit entre les trois atténuateurs et les trois antennes 11, 12 et 13.

Ces amplificateurs 27, 28 et 29 sont choisis de préférence avec un facteur de gain variable G(c). L'unité de commande automatique du gain (60) envoie des signaux de commande Vc2 des facteurs de gain de ces amplificateurs de manière à obtenir des signaux en entrée des élévateurs ayant une amplitude maximale dans la plage de fonctionnement de ces derniers.

Selon un mode de réalisation annexe, non représenté, les moyens d'amplification comprennent comme moyens d'amplification, la combinaison de l'amplificateur 50 selon le premier mode et des trois amplificateurs 27, 28 et 29 selon le deuxième mode. Cette solution, même si elle n'est pas très économique, présente l'avantage de disposer d'un moyen de réglage supplémentaire du gain total de sortie.

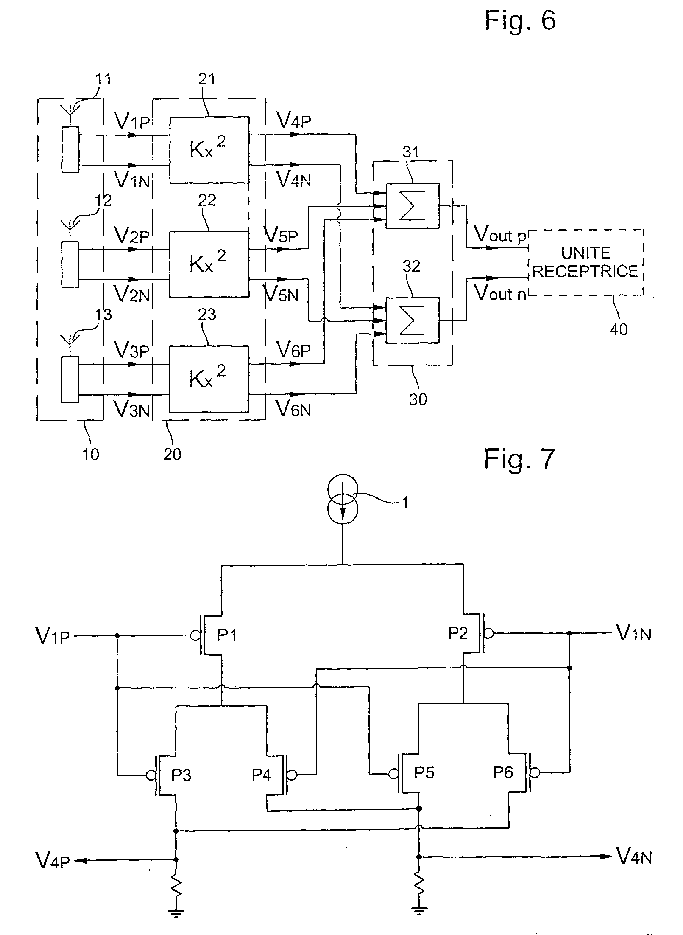

La figure 6 représente la mise en oeuvre de l'invention selon un troisième mode de réalisation particulier tenant compte du caractère différentiel des éléments utilisés. Il est à noter que le principe de l'invention reste inchangée.

EP 1 320 199 B1

Les antennes 11, 12 et 13 de l'étage de réception 10 délivrent chacune des signaux différentiels, respectivement, V1p et V1n, V2p et V2n, et V3p et v3n. Chacun des couples de signaux différentiels est fourni à des entrées différentielles des élévateurs au carré 21, 22 et 23, de l'étage de traitement 20. Les signaux différentiels délivrés en sortie de l'étage de traitement sont alors fournis à deux additionneurs 31 et 32 de l'étage de recombinaison. L'additionneur 31 reçoit par exemple les signaux V4p, V5p et V6p, et l'additionneur 32 reçoit alors les signaux V4n, V5n et V6n. L'unité réceptrice reçoit donc en entrée les signaux différentiels de sortie Voutp et Voutn.

Il est important de noter que tous les modes de réalisations présentés précédemment sont parfaitement applicables à ce mode particulier utilisant des éléments différentiels.

La figure 7 représente un exemple d'élévateur au carré différentiel utilisable dans le cadre de la présente invention.

Selon cet exemple, l'élévateur au carré est réalisé au moyen d'un mélangeur à deux entrées différentielles, dont les entrées sont reliées entre elles. Ce mélangeur comprend notamment une première paire différentielle de transistors P1 et P2 polarisés par la source de courant 1 reliée à leur drain, et commandée par les signaux différentiels, par exemple V1p et V1n, délivrés à la sortie de l'antenne correspondante, leur source étant reliée respectivement à des deuxième P3 et P4 et troisième paires P5 et P6 différentielles de transistors. Ces deuxièmes et troisièmes paires différentielles de transistors sont commandées par les mêmes signaux différentiels V1p et V1n que la première paire de transistors P1 et P2. Les sources des transistors P3 et P6 sont reliées entre elles constituant la première sortie V4p de l'élévateur, et les sources des transistors P4 et P5 sont reliées entre elles constituant la deuxième sortie V4n de l'élévateur. Les deux sorties différentielles sont connectées en entrée des moyens de recombinaison.

Un tel mélangeur à deux entrées possède une plage de fonctionnement relativement étendue, entre 5 et 40 mV, dans laquelle le coefficient de normalisation K reste sensiblement constant. Les moyens de commande automatique du gain sont agencés de préférence de manière à fournir des signaux de commande Vc1 et Vc2

L'élévateur au carré sus-décrit n'est donné qu'à titre d'exemple, il est tout à fait envisageable d'utiliser d'autres circuits élévateurs connu de l'homme de l'art.

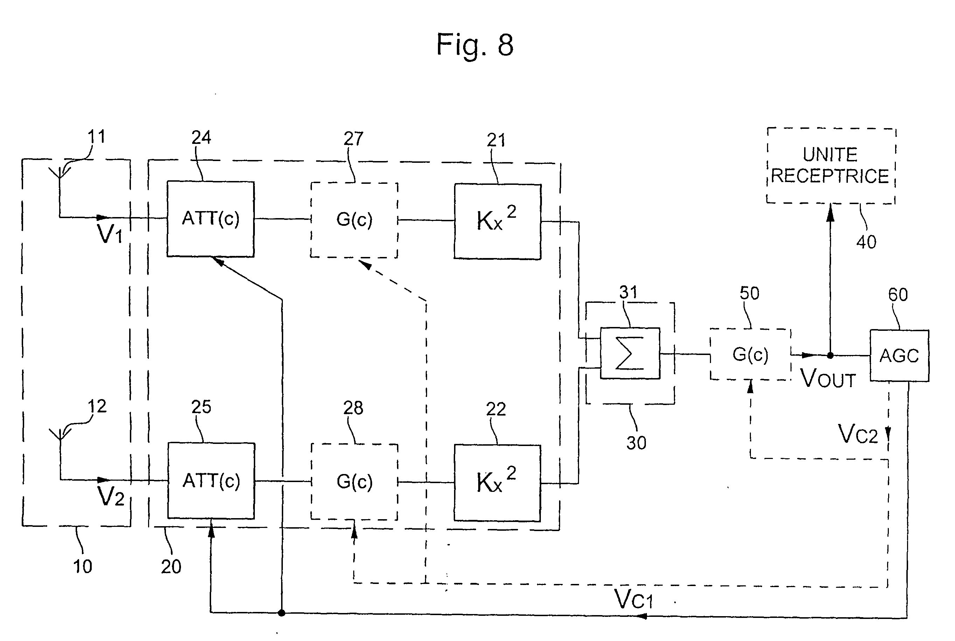

La figure 8 représente un quatrième mode de réalisation de l'invention ne comprenant que deux antennes. Ce mode de réalisation est utilisé notamment pour certaines applications bidimensionnelles.

La structure de ce récepteur est similaire à la structure des récepteurs présentés selon les modes de réalisation précédents. Le récepteur est décomposé en trois étages, un étage de réception 10 comprenant deux antennes 11 et 12, un étage de traitement 20 comprenant deux élévateurs au carré 21 et 22 connectés en sortie des deux antennes, et un étage de recombinaison 30 comprenant un additionneur 31 connectés en sortie des élévateurs au carré.

Selon ce mode de réalisation, on considère que le signal externe Vin reçu arrive dans le plan formé par les axes de réception des deux antennes. Chaque antenne reçoit alors une composante V1 et V2 de ce signal externe :

V1 = Vin.cosa ;
V2 = Vin.sina ;

Les signaux délivrés en sortie des deux élévateurs sont sous la forme suivante :

$V3 = K.Vin^2.cos^2a$ ;
$V4 = K.Vin^2.sin^2a$ ;

Le signal de sortie Vout est sous la forme suivante :

$$Vout = K.Vin^2$$

Le signal de sortie est donc indépendant de l'orientation des antennes dans le plan de réception qu'elles définissent.

Comme pour les autres modes de réalisation sus-présentés, des moyens d'amplification sont prévus. Dans le cas d'un récepteur effectuant une modulation d'amplitude, des moyens d'atténuation, et une unité de commande automatique du gain sont également prévus.

Il est important de noter que les moyens d'amplification et les moyens d'atténuation peuvent être différemment intégrés dans le circuit, sans pour autant sortir du cadre de l'invention, la seule contrainte étant que les moyens d'atténuation, s'il y en a, soient placés avant les élévateurs au carré.

Il est bien entendu que la description n'est donnée qu'à titre d'exemple et que d'autres modes de réalisation, en particulier de l'élévateur au carré, peuvent faire l'objet de la présente invention.

**Revendications**

1. Récepteur portable comprenant un étage de réception (10) dans lequel au moins deux antennes (11, 12 et 13) sont orientées suivant des axes de réception (x, y et z) différents, les antennes étant susceptibles de recevoir chacune une composante (V1, V2 ou V3), suivant leur axe de réception, d'un signal externe (Vin) dans une plage de fréquences donnée, un étage de traitement (20) desdites au moins deux composantes reçues par l'étage de réception, et un étage de recombinaison (30) d'au moins deux signaux (V4, V5 et V6) délivrés en sortie de l'étage de traitement, **caractérisé en ce que** l'étage de traitement comprend des élévateurs au carré (21, 22 et 23) connectés chacun entre une antenne (11, 12 et 13) et une entrée de l'étage de recombinaison.

2. Récepteur portable selon la revendication 1, **caractérisé en ce que** l'étage de réception (10) comprend trois antennes (11, 12 et 13) orientées de manière à ce que leurs axes de réception (x, y et z) forment un repère sensiblement orthogonal, **en ce que** les élévateurs au carré (21, 22 et 23) sont constitués par des mélangeurs à deux entrées reliées entre elles, et **en ce que** des moyens amplificateurs (27, 28, 29 et / ou 50) sont placés en entrée de l'étage de traitement (20) et / ou en sortie de l'étage de recombinaison (30).

3. Récepteur portable selon la revendication 2, **caractérisé en ce que** les moyens amplificateurs comprennent un amplificateur (50) ayant un facteur de gain variable (G(c)) connecté en sortie de l'étage de recombinaison (30).

4. Récepteur portable selon la revendication 2, **caractérisé en ce que** les moyens amplificateurs comprennent trois amplificateurs (27, 28 et 29) ayant des facteurs de gain variables (G(c)), respectivement connectés entre une des trois antennes (11, 12 et 13) et lesdites entrées du mélangeur (21, 22 et 23) correspondant.

5. Récepteur portable selon l'une des revendications 2 à 4, **caractérisé en ce que** chacun des mélangeurs (21, 22 et 23) a un coefficient de normalisation propre (K), constant dans une plage de fonctionnement définie, fonction de l'amplitude des signaux reçus par le mélangeur correspondant.

6. Récepteur portable selon la revendication 5, **caractérisé en ce qu'**il comprend en outre trois atténuateurs (24, 25 et 26) connectés respectivement entre une des trois antennes (11, 12 et 13) et les entrées reliées du mélangeur (21, 22 et 23) correspondant, chacun des atténuateurs étant défini par un coefficient d'atténuation variable (Att(c)), **en ce que** le récepteur comprend en outre des moyens de commande automatique du gain (60) placés dans une boucle de retour reliant la sortie de l'étage de recombinaison (30) auxdits atténuateurs (24, 25 et 26), et **en ce que** ces moyens de commande automatique du gain envoient un signal de commande du coefficient d'atténuation (Vc1) de manière à ce que l'amplitude des signaux délivrés en entrée des mélangeurs soit comprise dans la plage de fonctionnement du mélangeur correspondant.

7. Récepteur portable selon la revendication 6, **caractérisé en ce que** lesdits moyens de commande automatique du gain (60) envoient des signaux de commande du facteur de gain (Vc2) du ou des amplificateurs (27, 28, 29 et / ou 50) de manière à obtenir un signal de sortie (Vout) à amplitude constante.

8. Récepteur portable selon l'une quelconque des revendications précédentes, **caractérisé en ce que** tous les éléments constitutifs du récepteur sont des éléments différentiels.

**Claims**

1. Portable receiver comprising a receiving stage (10) wherein at least two antennae (11, 12 and 13) are orientated along different receiving axes (x, y and z), the antennae being capable to each receive a component (V1, V2, or V3) along their receiving axes, of an external signal (Vin) within a given frequency range, a processing stage (20) of said at least two components received by the receiving stage, and a recombination stage (30) of at least two signal (V4, V5 and V6) supplied at the output of the processing stage, **characterised in that** the processing stage comprises squaring circuits (21, 22 and 23) connected each between an antenna (11, 12, and 13) and an input of the recombination stage.

2. Portable receiver according to claim 1, **characterised in that** the receiving stage (10) comprises three antennae (11, 12 and 13) oriented so that their receiving axes (x, y, and z) form an orthogonal coordinate axes, **in that** the squaring circuits (21, 22 and 23) are formed of mixers having two inputs connected to each other, and **in that** the amplification means (27, 28, 29 and/or 50) are arranged at the input of the processing stage (20) and/or at the output of the recombination stage (30).

3. Portable receiver according claim 2, **characterised in that** the amplification means comprises an amplifier (50) having a variable gain factor (G(c)) connected at the output of the recombination stage (30).

4. Portable receiver according to claim 2, **characterised in that** the amplification means comprises three amplifiers (27, 28, and 29) having variable gain factors (G(c)) respectively connected between one of the three antennae (11, 12 and 13) and said inputs of the corresponding mixer (21, 22 and 23).

5. Portable receiver according to one of claims 2 to 4, **characterised in that** each of the mixers (21, 22 and 23) has its own normalisation coefficient (K) which is constant within a defined operation range, which is a function of the amplitude of the signals received by the corresponding mixer.

6. Portable receiver according to claim 5, **characterised in that** in further comprises three attenuators (24, 25 and 26) respectively connected between one of the three antennae (11, 12, and 13) and the connected inputs of the corresponding mixer (21, 22 and 23), each of the attenuators being defined by a variable attenuation factor (Att(c)), **in that** the receiver further comprises automatic gain control means (60) arranged in a feedback loop connecting the output of the recombination stage (30) to said attenuators (24, 25 and 26) and **in that** said automatic gain control means send an attenuation coefficient control signal (Vc1) so that the amplitude of the signals supplied at the input of the mixers is comprised within the operation range of the corresponding mixer.

7. Portable receiver according to claim 6, **characterised in that** said automatic gain control means (60) send gain coefficient control signals (Vc2) of the amplificator(s) (27, 28, 29 and/or 50) so that to obtain an output signal (vout) of constant amplitude.

8. Portable receiver according to any of the preceding claims, **characterised in that** all the constitutive elements of the receiver are differential elements.


**Patentansprüche**

1. Tragbarer Empfänger umfassend eine Empfangsstufe (10), in der wenigstens zwei Antennen (11, 12 und 13) gemäß den verschiedenen Empfangsachsen (x, y et z) orientiert sind, wobei jeder Antenne möglich ist, eine Komponenten (V1, V2 oder V3) eines äußeren Signals (Vin) in einem gegebenen Frequenzbereich gemäß ihrer Empfangsachse zu empfangen, einer Verarbeitungsstufe (20) für die mindestens zwei durch die Empfangsstufe empfangenen Komponenten und eine Rekombinationsstufe (30) für die mindestens zwei Signale (V4, V5 und V6), die von dem Ausgang der Verarbeitungsstufe abgegeben werden, **dadurch gekennzeichnet, daß** die Verarbeitungsstufe Quadrierer (21, 22 und 23) umfaßt, die jeder zwischen einer Antenne (11, 12 und 13) und einem Eingang der Rekombinationsstufe verbunden sind.

2. Tragbarer Empfänger nach Anspruch 1, **dadurch gekennzeichnet, daß** die Empfangsstufe (10) drei Antennen (11, 12 und 13) umfaßt, die derart orientiert sind, daß ihre Empfangsachsen (x, y und z) einen im wesentlichen orthogonalen Bezugsraum bilden, daß die Quadrierer (21, 22 und 23) durch an zwei Eingängen zwischen ihnen verbundenen Mischern gebildet sind, und daß Verstärkungsmittel (27, 28, 29 und/oder 50) am Eingang der Verarbeitungsstufe (20) und/oder am Ausgang der Rekombinationsstufe (30) angeordnet sind.

3. Tragbarer Empfänger nach Anspruch 2, **dadurch gekennzeichnet, daß** die Verstärkungsmittel einen einen variablen Verstärkungsfaktor (Gc)) aufweisenden Verstärker (50) umfassen, der mit dem Eingang der Rekombinationsstufe (30) verbunden ist.

4. Tragbarer Empfänger nach Anspruch 2, **dadurch gekennzeichnet, daß** die Verstärkungsmittel drei variable Verstärkungsfaktoren (Gc)) aufweisende Verstärker (27, 28 und 29) umfassen, die jeweils zwischen einer der drei Antennen (11, 12 und 13) und den Eingängen des entsprechenden Mischers (21, 22 und 23) verbunden sind.

5. Tragbarer Empfänger nach einem der Ansprüche 2 bis 4, **dadurch gekennzeichnet, daß** jeder Mischer (21, 22 und 23) einen zugeordneten Standardkoeffizienten (K) hat, der in einem definierten Quantisierungsbereich konstant ist, abhängig von der Amplitude der durch den entsprechenden Mischer empfangenen Signale.

**6.** Tragbarer Empfänger nach Anspruch 5, **dadurch gekennzeichnet, daß** er ferner drei jeweils zwischen einer der drei Antennen (11, 12 und 13) und den mit dem entsprechenden Mischer (21, 22 und 23) verbundenen Eingängen verbundene Dämpfer (24, 25 und 26) umfaßt, wobei jeder Dämpfer durch einen variablen Dämpfungskoeffizienten (Att(c)) definiert ist, daß der Empfänger ferner automatische Verstärkungssteuerungsmittel (60) umfaßt, die in einer Rückführschleife angeordnet sind, die den Ausgang der Rekombinationsstufe (30) mit den Dämpfern (24, 25 und 26) verbindet, und daß die automatischen Verstärkungssteuerungsmittel ein Steuersignal des Dämpfungskoeffizienten (Vc1) derart senden, daß die Amplitude der an den Eingang der Mischer gesendeten Signale in dem Quantisierungsbereich des entsprechenden Mischers enthalten ist.

**7.** Tragbarer Empfänger nach Anspruch 6, **dadurch gekennzeichnet, daß** die automatischen Verstärkungssteuerungsmittel (60) Steuersignale des Verstärkungsfaktors (Vc2) des oder der Verstärkern (27, 28, 29 und/oder 50) derart senden, daß ein Ausgangssignal (Vout) mit konstanter Amplitude erhalten wird.

**8.** Tragbarer Empfänger nach einem der vorangegangenen Ansprüche, **dadurch gekennzeichnet, daß** alle den Empfänger bildenden Elemente Differentialelemente sind.

## Fig.1
### (Art antérieur)

AMPLIFICATEUR 4

$V_1$

$V_4$

AMPLIFICATEUR 5

$V_2$

$V_5$

ADDITIONNEUR OU SELECTIONNEUR 7

$V_{OUT}$

AMPLIFICATEUR 6

$V_3$

$V_6$

## Fig.2A

$z$

$V_3$

$V_{in}$

$b$

$a$

$V_1$

$x$

$V_2$

$y$

Fig.2B

ZONE DE NON
RECEPTION

ZONE DE
DISPERSION

ZONE DE
RECEPTION

EMETTEUR

B

A

Fig.3

11

21

$K_x{}^2$

$V_1$

$V_4$

12

22

$K_x{}^2$

$V_2$

$V_5$

31

40

$\sum$

$V_{OUT}$

UNITE
RECEPTRICE

30

13

23

$K_x{}^2$

$V_3$

$V_6$

10

20

Fig. 4

Fig.5

Fig. 6

Fig. 7

# Fig. 8

EP 1 320 199 B1